# EUROPEAN PATENT SPECIFICATION

(11) **EP 1 664 977 B1**
(45) Date of publication and mention of the grant of the patent: **09.12.2009**
(21) Application number: 04725981.7
(22) Date of filing: 06.04.2004
(51) Int. Cl.: G06F 21/00

(54) **MULTI-FUNCTION PORTABLE DEVICE FOR ELECTRONIC PROCESSORS**
TRAGBARE MEHRFUNKTIONSEINRICHTUNG FÜR ELEKTRONISCHE PROZESSOREN
DISPOSITIF PORTABLE MULTIFONCTION POUR PROCESSEURS ELECTRONIQUES

(30) Priority: 18.09.2003 IT TO20030716
(43) Date of publication of application: 07.06.2006
(73) Proprietor: Eutronsec S.p.A., 24048 Curnasco di Treviolo BG (IT)
(72) Inventor: RUGGERO, Gissi c/o Eutron Infosecurity S.R.L., I-24048 Curnasco di Treviolo (BG) (IT)
(74) Representative: Garavelli, Paolo
(86) International application number: PCT/IT2004/000177
(87) International publication number: WO 2005/026923

(56) References cited:
- EP-A- 1 001 329
- WO-A2-02/23357
- US-A1- 2003 009 687
- US-B1- 6 539 101

## Description

The present invention refers to a multi-function portable device for electronic processors adapted to be connected to an output port of such processors in order to increase the functionalities available for them.

Various portable devices are known in the art and are adapted to be connected to the USB (Universal Serial Bus) port of a personal computer: they are usually shaped substantially as a parallelepiped, with very small sizes (usually not bigger that a finger of a hand or a common key-holder) and perform one different functionality each, such as mass storage, cryptography, smart card reading, SIM card reading and the like. WO 02/23357 A2 discloses a multi-function portable device according to the preamble of claim 1.

Currently there are no commercially available portable devices of this type that contain therein all the above-mentioned functionalities at the same time, and that are able to contain other future functionalities and that are able to be quickly and efficiently connected to any type of processor that can be found on the market.

Object of the present invention is solving the above prior-art problems, by providing a portable device for electronic processors that is of the multi-function type, namely is able to contain therein a whole set of functionalities that can be found on the market only in different devices.

A further object of the present invention is providing a device of the above-mentioned type that allows an easy, immediate and reliable connection to any type of current and future processor.

The above and other objects and advantages of the invention, as will appear from the following description, are obtained by a multi-function device as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:
- Figure 1 is an external perspective view of a preferred embodiment of the device according to the present invention;
- Figure 2 is a top view of the device in Fig. 1 in a ready-for-use configuration;
- Figure 3 is a block diagram of the general USB connection architecture of the device of the invention;
- Figure 4 is a block diagram of the connection architecture of the inventive device in a wireless arrangement;
- Figure 5 is a block diagram of the managing architecture for some functionalities of the inventive device;
- Figure 6 is a block diagram of the managing architecture of other functionalities of the inventive device;
- Figure 7 is a block diagram of the managing architecture of other further functionalities of the inventive device;
- Figure 8 is a flow chart that shows the general operation of the device of the invention;
- Figures 9 to 11 are electric diagrams of the variation of the device shown in Fig. 5;
- Figures 12 to 14 are electric diagrams of the variation of the device shown in Fig. 6; and
- Figures 15 to 18 are electric diagrams of the variation of the device shown in Fig. 7.

With reference to the Figures, a preferred embodiment of the multi-function device of the present invention is shown and described. It will be immediately obvious to the skilled people in the art that numerous variations and modifications (for example related to shape, sizes arrangements and parts with equivalent functionalities) could be made to the described device without departing from the scope of the invention as claimed in the enclosed Claims.

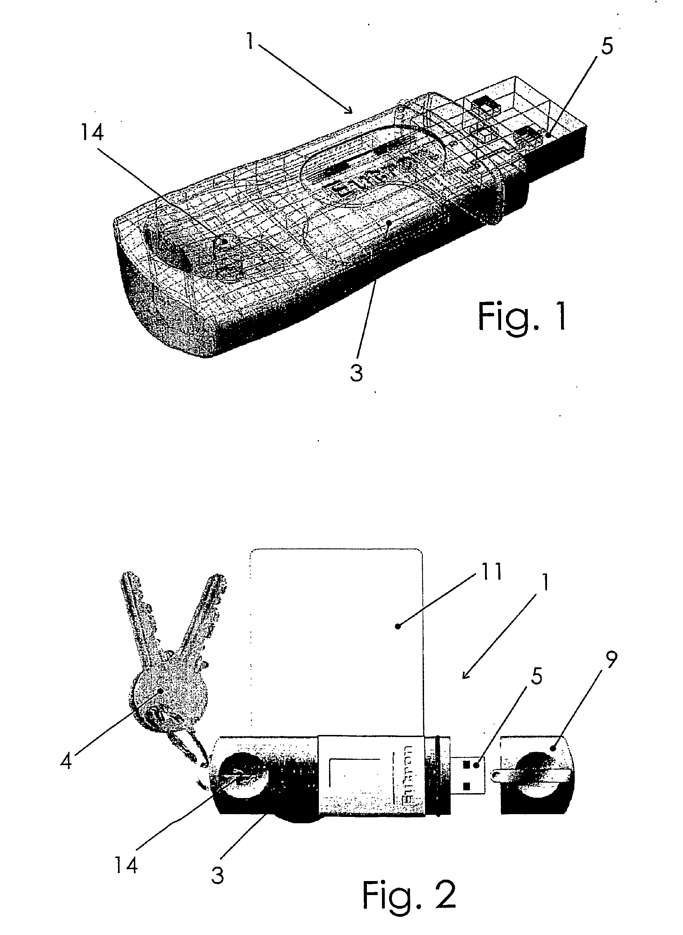

Externally, as shown in Fig. 1 and 2, the multi-function device 1 of the invention is realised with a main body 3 whose shape is substantially like a parallelepiped with rounded edges and whose sizes are small, approximately equal to the sizes of a common key-holder (in Fig. 2 keys 4 are shown, connected to the device 1 that can indeed operate also as key-holder).

The main body 3 of the device 1 is equipped at one end with an interface 5 for connecting to a port (in the shown case the USB type port) of a personal computer through which it will be possible to exchange data, programs and information with the computer itself. In a further embodiment (not shown) of the device 1, the interface 5 could be of the wireless type, such as for example of the infrared rays type, or any other interface adapted to communicate with a computer. The device 1 can also comprise a cover element 9 protecting the interface 5.

The device 1, as can be seen in Fig. 2, is adapted to be connected to cards 11, of the smart card type, that are inserted thereinto in order to read their contents and exchange information with the device 1. For such purpose, the device 1 is further equipped with pushbutton means 14 adapted to send, in a known way, a series of control signals for functions of the cryptographic type or for interacting with a smart card.

With these general arrangements, the device 1 of the invention is thereby adapted to contain and perform therein a plurality of functionalities, that were not available before on the market unless through similar, but separate devices.

The main functionalities with which the device 1 of the invention is equipped, separately or in combination, are:
- mass storage;
- cryptography;
- smart card reading;
- SIM card reading.

Obviously, due to how the device 1 of the invention is structured, it will always possible to add other functionalities in the future, or create devices 1 with different combinations of the provided functionalities.

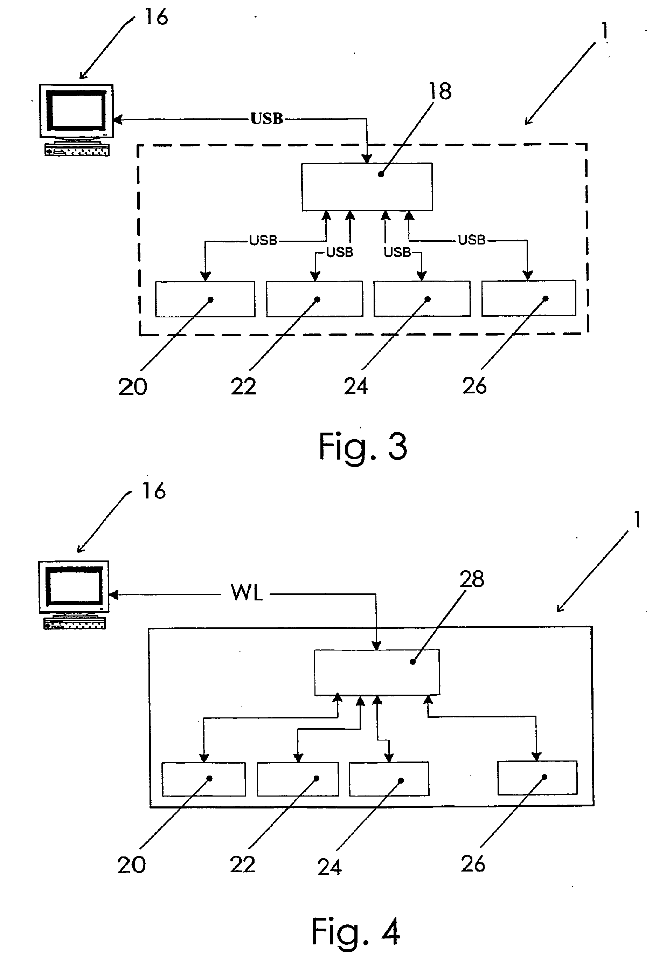

Fig. 3 shows the general architecture of the device 1 of the invention, connected to an external processor 16, for example of the host type. It is possible to distinguish in the block diagram in Fig. 3 the main components of the device 1, and namely, first of all, the transmission controller 18: such component enables the communication between host 16 and various functional means 20, 22, 24, 26 etc. implemented inside the device 1, for example through a USB protocol; currently a 4-port USB HUB 18 is used, but, if deemed necessary, the number of ports can be increased up to 32.

It must be noted that currently the USB HUB 18 communicates with the host 16 in a Full-Speed mode, while the various functional means 20, 22, 24, 26 can communicate both in Full-Speed mode and in Low-Speed mode. It can be provided to replace the HUB 18 with a HUB of the High-Speed type and this will allow integrating in the device 1 also functional means that are able to communicate in "High-Speed USB" mode.

As already stated, it is not necessary that all functional means 20, 22, 24, 26, etc. are present: in the current configuration, the functional means range from a minimum of 2 to a maximum of 4, but in future configurations the number of such means can arrive up to 32.

The USB HUB 18 is of the Standard type and therefore it does not need particular drivers. This implies that the recognition from the managing operating system (that could for example be Microsoft Windows 2000® and higher, Linux Kernel 2.4® and higher, MaxOS® and higher) is automatic and completely transparent for the end user.

Fig. 4 shows an architecture that is similar to the one in Fig. 3, in which however the communication with host 16 occurs through a wireless (WL) connection, for which a suitable HUB 28 is provided. In this case, the number of functional means driven by the HUB 28 strongly depends on the computation power of the HUB 28 itself and therefore it cannot be determined a priori.

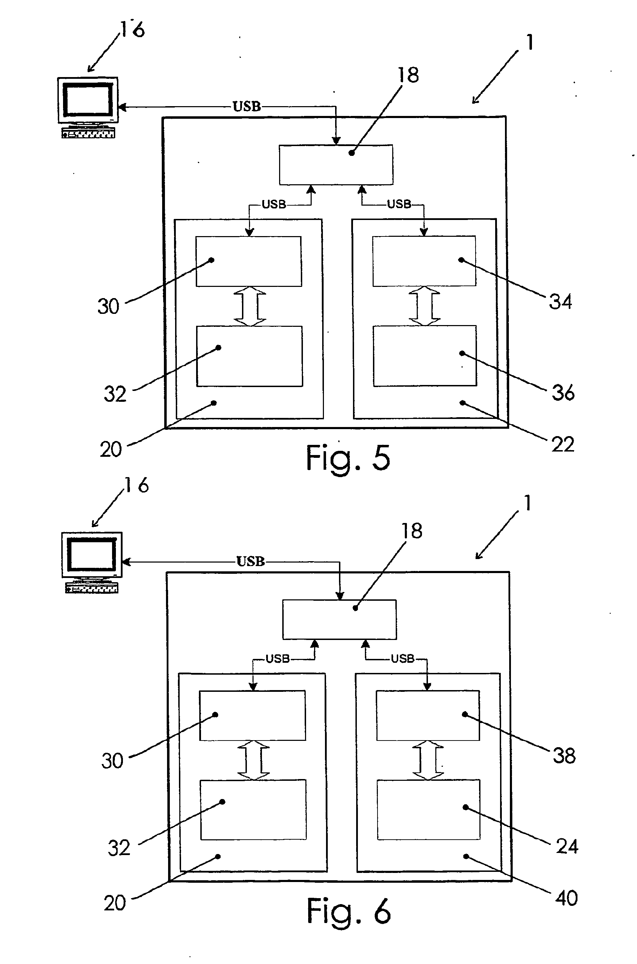

Some possible practical embodiments of the device 1 of the invention will now be described as a non-limiting example. A first variation of such device 1 is shown in Fig. 5, in which the mass storage and cryptography functionalities are integrated in a single product.

For such purpose, the mass storage functional means 20 comprise a mass storage microcontroller 30 connected to the USB HUB 18 and to a mass storage 32, preferably of the Flash type. In parallel, the cryptography functional means 22 comprise a cryptographic microcontroller 34 (preferably of the ISO7816 type) connected to the USB HUB 18 and to a cryptographic chip 36, preferably of the die- or package-type.

Fig. 6, instead, shows the variation of the device 1 that integrates mass storage (already shown in Fig. 5) and smart card reader and/or SIM card reader. For such purpose, in addition to the functional means 20, smart card reading functional means 24 are provided, comprising a smart card reading microcontroller 38 connected to the USB HUB 18 and to a smart card connector or SIM card connector 40.

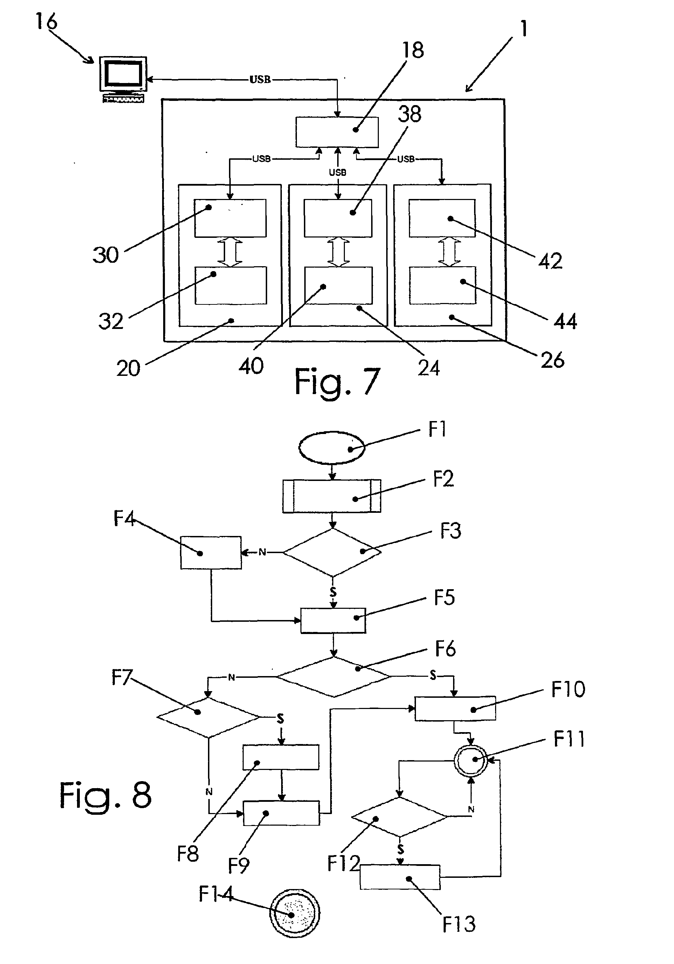

Fig. 7 instead shows a variation simultaneously containing mass storage, smart card reading and SIM card reading. In addition to the already-described functional means 20 and 24, SIM card reading functional means 26 are provided, comprising a SIM card reading microcontroller 42 connected to the USB HUB 18 and to a SIM card connector 44.

It is obvious that the connections of functional means in Fig. 5 to 7 have been shown as realised towards a USB HUB 18 for a USB-type connection to host 16; the same operating indications are valid in case of wireless connection and wireless HUB 28.

In all configurations shown, and in all other ones that can be derived from possible combinations of the stated functionalities, the processor 6 will recognise the various functional means 20, 22, 24, 26, etc. through suitable drivers being present on the operating system or that are owned by the manufacturers of the different functionalities.

Fig. 8 shows the general operation of the device 1 of the invention.

After the connection (F1), a communication with the host 16 is established (F2) and it is checked (F3) whether HUB 18 or 28 is installed. If the reply is negative, the HUB 18 or 28 itself is installed (F4), while, if the reply is positive, the HUB 18 or 28 is started (F5).

It is then checked (F6) whether the functional means 20, 22, 24, 26, etc. are installed. If the reply is negative, it is checked whether external drivers are necessary (F7) and, if this is the case, the drivers are requested (F8), otherwise the various functional means are installed (F9). If the reply to the check (F6) is positive, the various functional means 20, 22, 24, 26, etc. are started (F10) by placing them in an idle state (F11).

Starting from such state (F11), it is checked whether a functionality request is pending (F12) and if this is the case, such request is processed (F13) in a known way for the different provided functionalities.

The device remains operating under this mode till it is disconnected (F14).

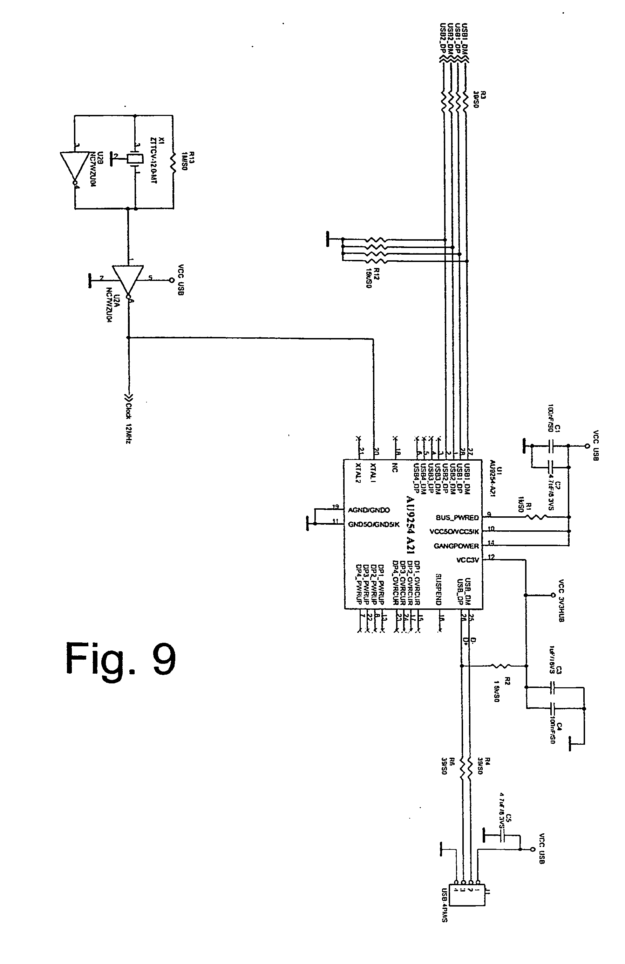

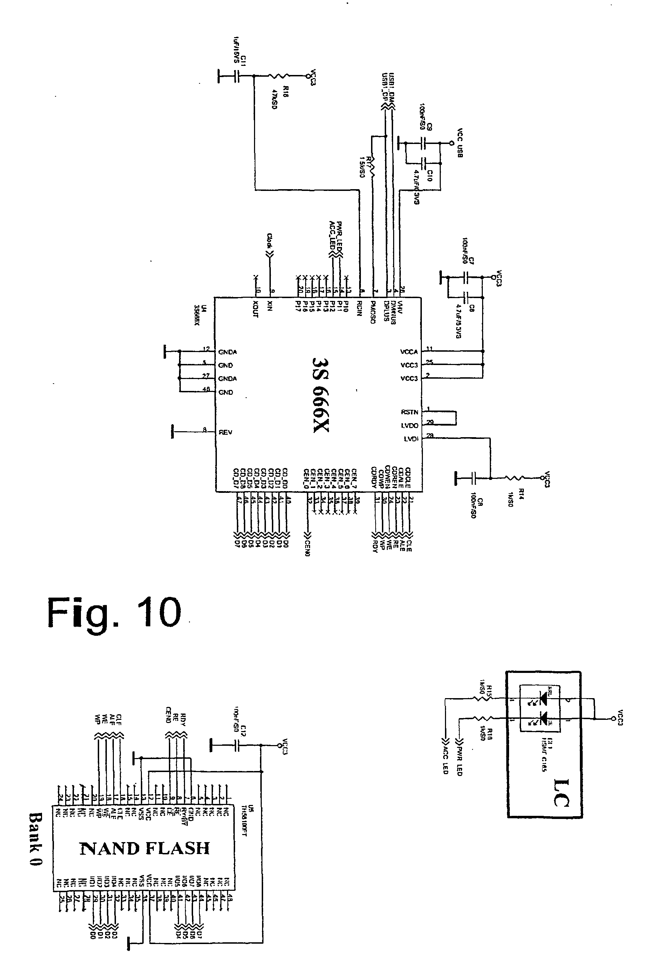

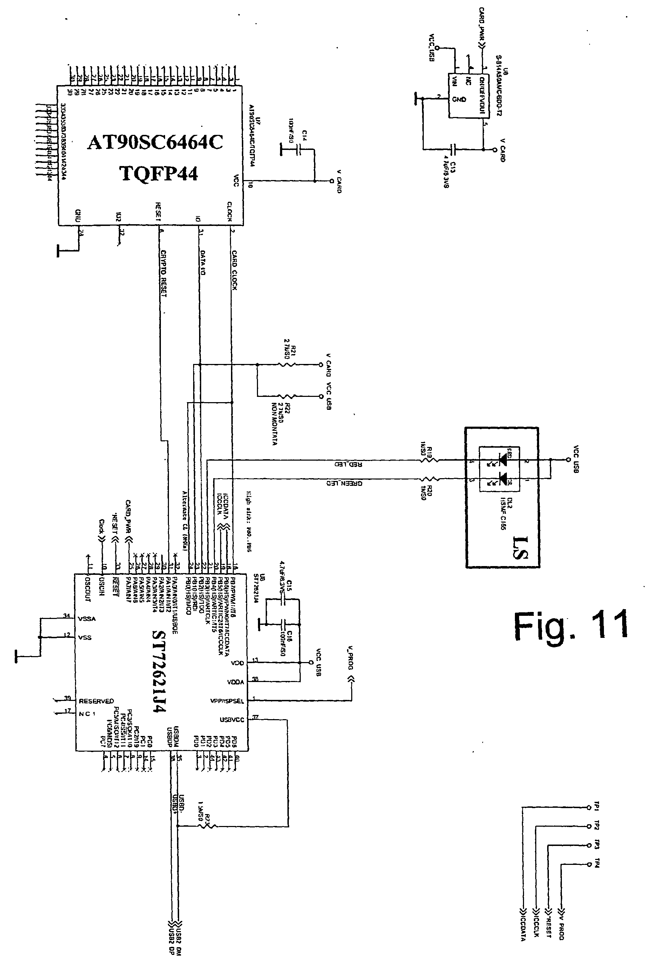

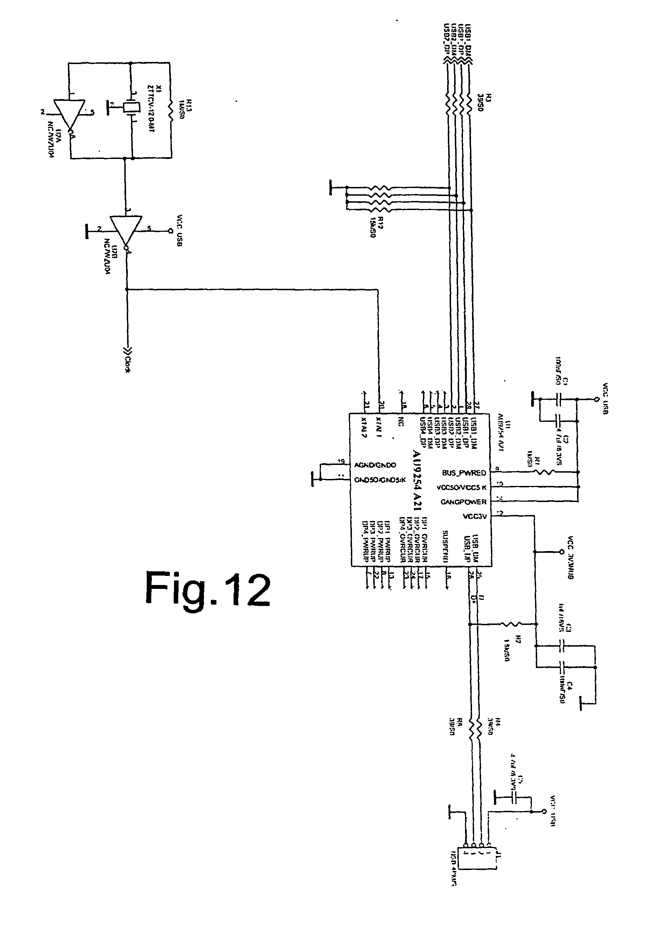

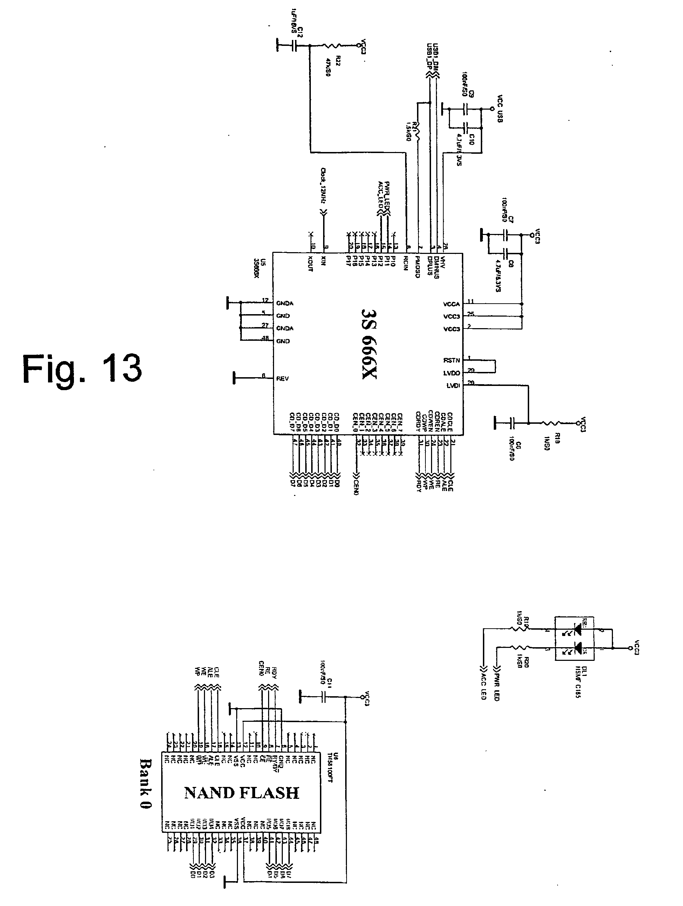

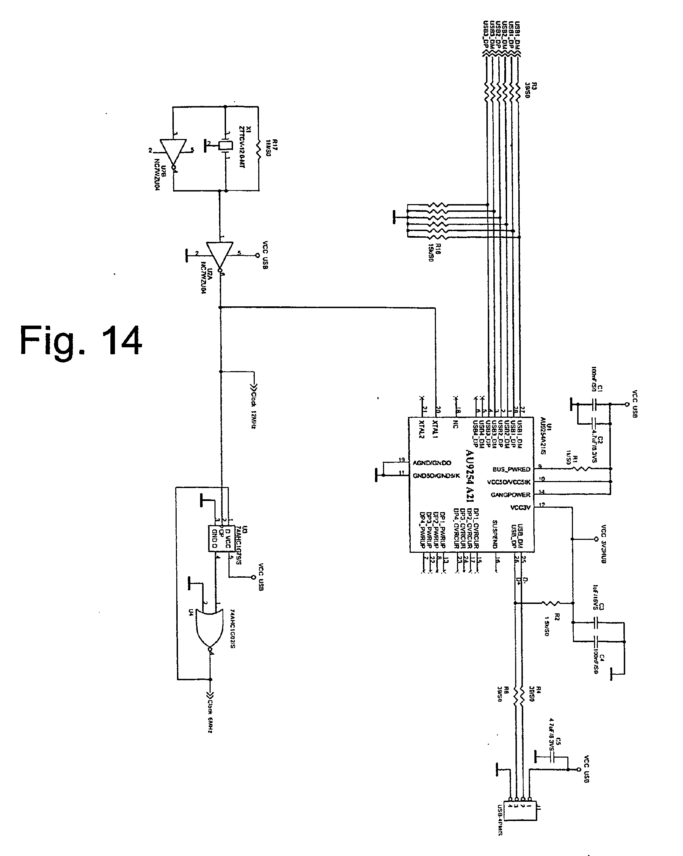

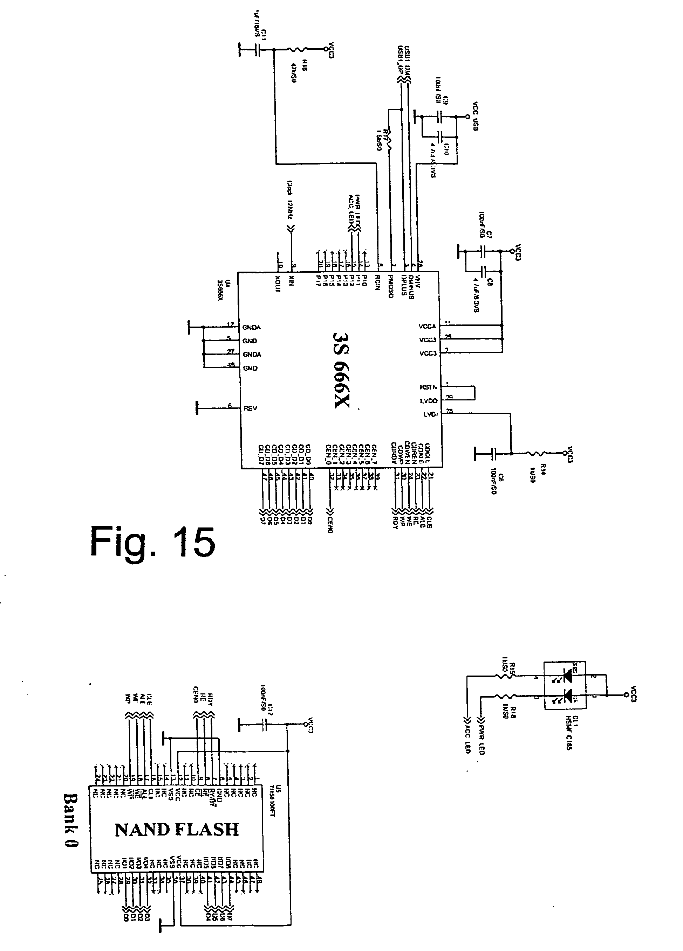

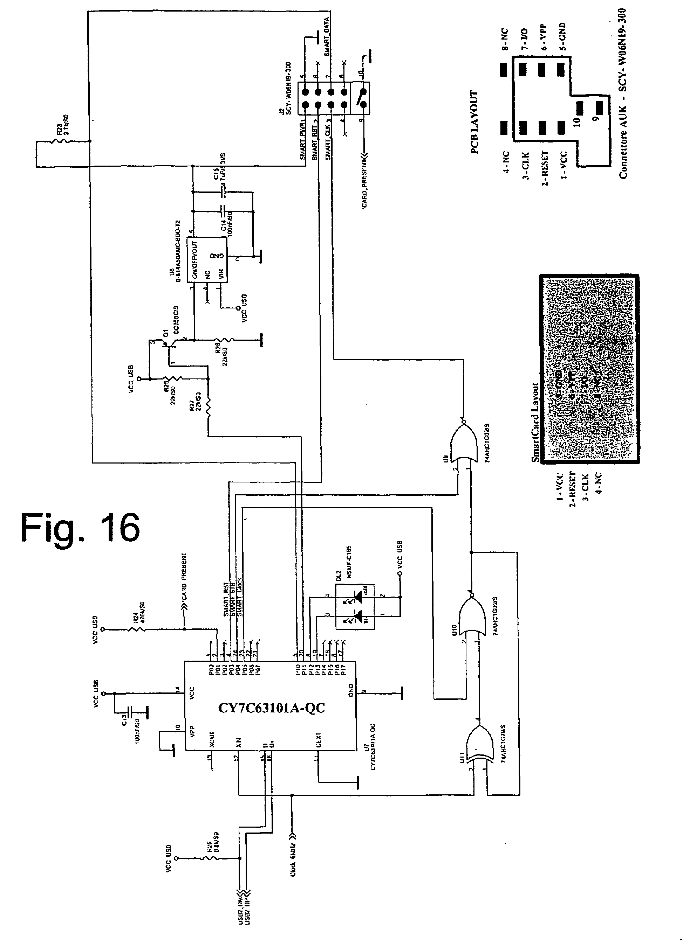

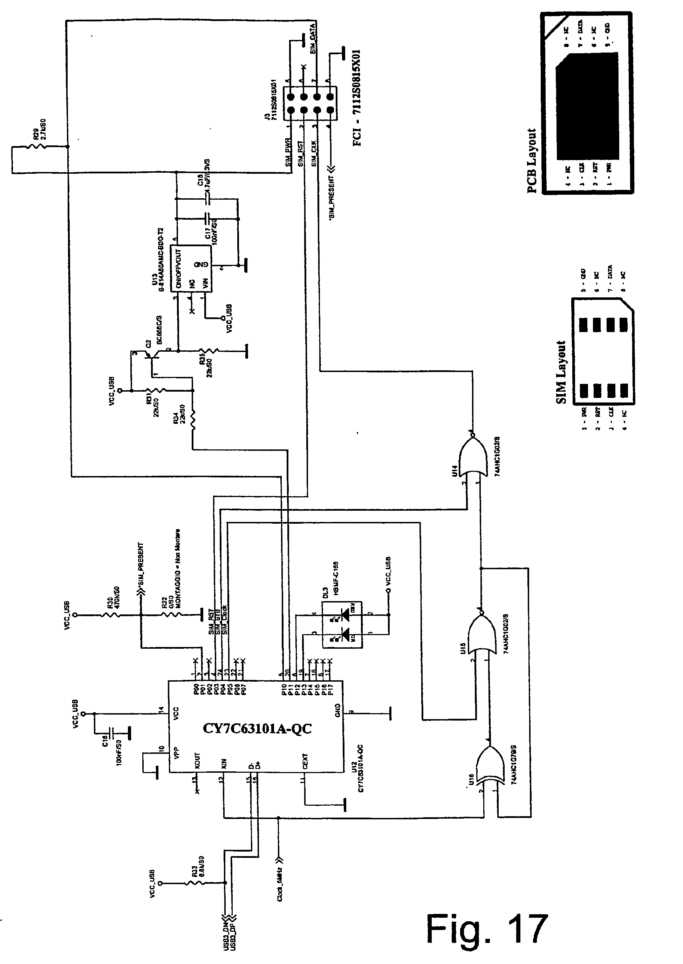

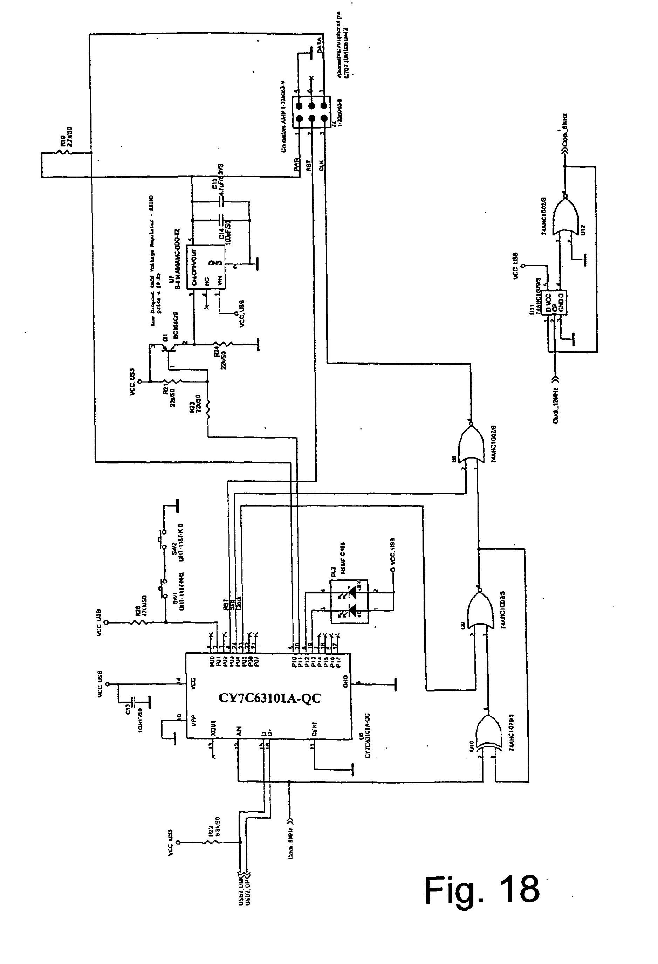

As final practical example, Figures 9 to 11 are electric diagrams that allow realising the variation of the device shown in Fig. 5; Figures 12 to 14 are electric diagrams that allow realising the variation of the device shown in Fig. 6; and Figures 15 to 18 are electric diagrams that allow realising the variation of the device shown in Fig. 7.

## Claims

1. A multi-function portable device (1) for electronic processors (16), comprising a main support body (3) equipped with interface means (5) for connecting to said electronic processors (16) and with pushbutton means (14) for sending control signals, said device (1) further comprising functional means (20, 22, 24, 26) connected to a transmission controller (18, 28) that controls said interface means (5, 18, 28), said functional means (20, 22, 24, 26) being adapted to simultaneously perform at least two of the following functions:
- mass storage;
- cryptography;
- smart card reading;
- SIM card reading;
**characterised in that** the mass storage function is performed through a mass storage microcontroller (30) operatively coupled with the transmission controller (18, 28) and with a mass storage (32), said mass storage (32) being a Flash-type memory, and **in that** said transmission controller (18) is a controller of the HUB-type for USB.

2. Multi-function device (1) according to claim 1, **characterised in that** said functional means (20, 22, 24, 26) are each composed of respective processing and control means (30, 34, 38, 42) coupled with respective operating means (32, 36, 40, 44).

3. Multi-function device (1) according to claim 1, **characterised in that** the cryptographic check function is performed through a cryptographic checking microcontroller (34) operatively coupled with the transmission controller (18, 28) and with a cryptographic chip (36).

4. Multi-function device (1) according to claim 3, **characterised in that** said cryptographic checking microcontroller (34) is of the ISO7816 type.

5. Multi-function device (1) according to claim 3 or 4, **characterised in that** said cryptographic chip (36) is of the die- or package-type.

6. Multi-function device (1) according to claim 1, **characterised in that** the smart card reading function is performed through a smart card reading microcontroller (38) operatively coupled with the transmission controller (18, 28) and with a smart card connector or SIM card connector (40).

7. Multi-function device (1) according to claim 1, **characterised in that** the SIM card reading function is performed through a SIM card reading microcontroller (42) operatively coupled with the transmission controller (18, 28) and with a SIM card connector (44).

## Patentansprüche

1. Tragbare Multifunktionsvorrichtung (1) für elektronische Datenverarbeiter (16), einschließlich einer Haupthalterung (3) mit Schnittstellen (5) für Anschluss an die besagten, elektronischen Datenverarbeiter (16) und Taste (14) für Versand der Befehlssignale. Diese Vorrichtung (1) enthält weiterhin funktionelle Mittel (20, 22, 24, 26), die mit einem Übertragungskontroller (18, 28) verbunden sind, welcher die besagten Schnittstellen (5, 18, 28) und die besagten funktionellen Mittel (20, 22, 24, 26) steuert, die gleichzeitig zumindest zwei der nachstehenden Funktionen ausüben:
- Massenspeicher;
- Kryptographie;
- Ablesung der Smart-Karte;
- Ablesung der SIM-Karte;
charakterisiert durch die Tatsache, dass die Massenspeicherfunktion durch einen Mikrokontroller des Massenspeichers (30) erfolgt, der operativ mit dem Übertragungskontroller (18, 28) und einem Massenspeicher (32) gekoppelt ist. Der besagte Massenspeicher (32) ist ein Flash-Speicher, charakterisiert durch die Tatsache, dass der Übertragungskontroller (18) ein HUB-Kontroller für USB ist.

2. Multifunktionsvorrichtung (1) nach Patentanspruch 1, charakterisiert durch die Tatsache, dass die besagten funktionellen Mittel (20, 22, 24, 26) jeweils aus den betreffenden Verarbeitungs- und Kontrollmitteln (30, 34, 38, 42) bestehen, die mit den operativen Mitteln (32, 36, 40, 44) gekoppelt sind.

3. Multifunktionsvorrichtung (1) nach Patentanspruch 1, charakterisiert durch die Tatsache, dass die Funktion der kryptographischen Kontrolle durch einen Mikrokontroller (34) erfolgt, der operativ mit dem Übertragungskontroller (18, 28) und einem Kryptographieplättchen (36) gekoppelt ist.

4. Multifunktionsvorrichtung (1) nach Patentanspruch 3, charakterisiert durch die Tatsache, dass der besagte Mikrokontroller für die kryptographische Kontrolle (34) Typ IS07816 ist.

5. Multifunktionsvorrichtung (1) nach Patentanspruch 3 oder 4, charakterisiert durch die Tatsache, dass das betreffende Kryptographieplättchen (36) des Typs "Die" oder "Package" ist.

6. Multifunktionsvorrichtung (1) nach Patentanspruch 1, charakterisiert durch die Tatsache, dass die Ablesefunktion der Smart-Karte durch einen Mikrokontroller für Smart-Kartenablesung (38) erfolgt, der operativ mit dem Übertragungskontroller (18, 28) und einem Steckverbinder für Smart-Karte oder einem Steckverbinder für SIM (40) gekoppelt ist.

7. Multifunktionsvorrichtung (1) nach Patentanspruch 1, charakterisiert durch die Tatsache, dass die Ablesefunktion der SIM-Karte durch einen Mikrokontroller für SIM-Kartenablesung (42) erfolgt, die operativ mit dem Übertragungskontroller (18, 28) und einem Steckverbinder für SIM-Karte (44) gekoppelt ist.

## Revendications

1. Dispositif à fonctions multiples portatif (1) pour ordinateurs électroniques (16), comprenant un corps principal de support (3) équipé de moyens d'interface (5) pour le branchement auxdits ordinateurs électroniques (16) et de moyens type boutons-poussoirs (14) pour envoyer des signaux de commande, ledit dispositif (1) comprenant encore des moyens fonctionnels (20, 22, 24, 26) reliés à un contrôleur de transmission (18, 28) qui commande lesdits moyens d'interface (5, 18, 28), lesdits moyens fonctionnels (20, 22, 24, 26) étant capables de réaliser simultanément au moins deux des fonctions suivantes:
- mémoire de masse;
- cryptographie;
- lecture de smart card;
- lecture de SIM card;
**caractérisé en ce que** la fonction de mémoire de masse est réalisée par l'intermédiaire d'un microcontrôleur de mémoire de masse (30) accouplé en mode opérationnel au contrôleur de transmission (18, 28) et à une mémoire de masse (32), ladite mémoire de masse (32) étant une mémoire du type Flash, et **en ce que** ledit contrôleur de transmission (18) est un contrôleur du type HUB pour USB.

2. Dispositif à fonctions multiples (1) selon la revendication 1, **caractérisé en ce que** lesdits moyens fonctionnels (20, 22, 24, 26) sont chacun constitués par des respectifs moyens de traitement et de contrôle (30, 34, 38, 42) accouplés à de respectifs moyens opérationnels (32, 36, 40, 44).

3. Dispositif à fonctions multiples (1) selon la revendication 1, **caractérisé en ce que** la fonction de contrôles cryptographiques est réalisée à travers un microcontrôleur de contrôle cryptographique (34) accouplé en mode opérationnel au contrôleur de transmission (18, 28) et à une platine de cryptographie (36).

4. Dispositif à fonctions multiples (1) selon la revendication 3, **caractérisé en ce que** ledit microcontrôleur de contrôle cryptographique (34) est du type IS07816.

5. Dispositif à fonctions multiples (1) selon la revendication 3 ou 4, **caractérisé en ce que** ladite platine de cryptographie (36) est du type die ou package.

6. Dispositif à fonctions multiples (1) selon la revendication 1, **caractérisé en ce que** la fonction de lecture de smart card est réalisée à travers un microcontrôleur de lecture de smart card (38) accouplé en mode opérationnel au contrôleur de transmission (18, 28) et à un connecteur pour smart card ou connecteur pour SIM (40).

7. Dispositif à fonctions multiples (1) selon la revendication 1, **caractérisé en ce que** la fonction de lecture de la SIM card est réalisée à travers un microcontrôleur de lecture de SIM card (42) accouplé en mode opérationnel au contrôleur de transmission (18, 28) et à un connecteur de SIM card (44).
